(19) Europäisches Patentamt / European Patent Office / Office européen des brevets

(11) **EP 1 929 188 B1**

(12) **FASCICULE DE BREVET EUROPEEN**

(45) Date de publication et mention
de la délivrance du brevet:
**03.03.2010 Bulletin 2010/09**

(51) Int Cl.:
**F16H 61/02** *(2006.01)*        **F02D 41/02** *(2006.01)*
**F02D 41/40** *(2006.01)*

(21) Numéro de dépôt: **06831206.5**

(22) Date de dépôt: **21.09.2006**

(86) Numéro de dépôt international:
**PCT/FR2006/050917**

(87) Numéro de publication internationale:
**WO 2007/034119 (29.03.2007 Gazette 2007/13)**

(54) **PROCEDE D'OBTENTION DE GAZ D'ECHAPPEMENT CHARGES EN CARBURANT ET VEHICULE AUTOMOBILE ASSOCIE**

VERFAHREN ZUM ERHALTEN VON KRAFTSTOFFGELADENEN ABGASEN UND ENTSPRECHENDES MOTORFAHRZEUG

METHOD FOR OBTAINING FUEL-LOADED EXHAUST GASES AND RELATED MOTOR VEHICLE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.09.2005 FR 0509634**

(43) Date de publication de la demande:
**11.06.2008 Bulletin 2008/24**

(73) Titulaire: **RENAULT S.A.S.**
**92100 Boulogne Billancourt (FR)**

(72) Inventeurs:
• **PILLOT, Adrien**
  **F-91290 Arpajon (FR)**
• **ETCHEVERRY, Céline**
  **F-92330 Sceaux (FR)**
• **GODON, Fabien**
  **F-94400 Vitry sur Seine (FR)**
• **SADAI, Stéphane**
  **F-75013 Paris (FR)**

(56) Documents cités:
**EP-A- 1 382 812      EP-A- 1 437 492**
**FR-A- 2 820 462      FR-A- 2 862 096**
**US-A- 5 997 434      US-A1- 2003 145 582**

**Description**

L'invention concerne un procédé d'obtention de gaz d'échappement chargés en carburant dans un moteur Diesel.

Cette invention concerne plus particulièrement les véhicules automobiles à moteur Diesel munis d'une boîte de vitesses automatique, robotisée ou à variation continue du couple, ces boîtes de vitesses à variation continue du couple étant également appelées « boîtes CVT » (de l'anglais « Continuously Variable Torque »).

Un tel procédé d'obtention de gaz d'échappement chargés en carburant peut notamment être mis en oeuvre lors d'une phase de régénération d'un filtre à particules dans un véhicule automobile comprenant, sur sa ligne d'échappement un filtre à particules et un catalyseur d'oxydation.

Afin de satisfaire aux nouvelles réglementations en matière de pollution, il est connu d'utiliser un filtre à particules, implanté dans la ligne d'échappement en aval des chambres de combustion du moteur. Ce filtre à particules retient les particules polluantes qui s'accumulent en son sein au fur et à mesure que le moteur Diesel fonctionne.

L'accumulation de particules dans le filtre à particules engendre un engorgement du filtre à particules qui entrave considérablement l'évacuation des gaz d'échappement depuis le moteur. Il en résulte une forte contre-pression dans la ligne d'échappement ce qui affecte les performances du moteur.

Afin d'éliminer l'accumulation de particules dans le filtre à particules, il est connu de brûler périodiquement les particules contenues dans le filtre à particules pendant des phases dites « de régénération ». Pour ce faire, on augmente la température des gaz à l'échappement de manière à augmenter la température des particules et initier leur combustion.

Une solution connue pour augmenter la température des gaz d'échappement consiste à adopter un procédé d'injection particulier durant les phases de régénération du filtre à particules. Une première injection est réalisée dans la chambre de combustion de manière classique, c'est-à-dire durant le temps de compression du mouvement du piston dans la chambre de combustion, puis on procède à une ou plusieurs injections supplémentaires, dites « retardées ». Par injection retardée, on entend une injection de carburant dans la chambre de combustion durant le temps de détente alors que le vilebrequin du moteur a dépassé sa position correspondant au point mort haut du piston d'un angle compris entre 30 et 40°.

Une solution complémentaire ou alternative consiste à effectuer une ou plusieurs injections dites « tardives ». Par « injection tardive », on entend une injection de carburant dans la chambre de combustion durant le temps de détente alors que le vilebrequin a dépassé sa position correspondant au point mort haut d'un angle compris entre 110 et 130°.

Grâce à ces injections tardives ou retardées, il est possible de charger les gaz d'échappement du moteur en carburant. En effet, comme le carburant injecté durant une injection retardée, le carburant injecté durant une injection tardive ne brûle pas complètement dans la chambre de combustion. Une partie du carburant parvient dans une partie catalytique de la ligne d'échappement, classiquement prévue pour oxyder les hydrocarbures résiduels et le monoxyde de carbone. Le carburant y est oxydé, ce qui augmente la température des gaz dans le catalyseur d'oxydation et en aval de ce dernier. Les gaz ainsi réchauffés peuvent alors être utilisés pour la régénération du filtre à particules.

Les procédés comprenant une ou plusieurs injections retardées et/ou tardives permettent ainsi de charger les gaz d'échappement d'un moteur Diesel en carburant, par exemple pour régénérer un filtre à particules. De manière plus générale, ils permettent d'augmenter la concentration de carburant dans les gaz d'échappement en sortie de chambre de combustion.

Cependant, l'injection ayant lieu durant le temps de détente, une partie du carburant injecté est pulvérisée pratiquement directement sur la chemise du cylindre délimitant, avec le piston et la culasse, la chambre de combustion. Ce carburant peut alors être dilué dans l'huile couvrant cette chemise. Cette dilution pose au moins deux problèmes. D'une part, l'huile de lubrification coule le long de la chemise du cylindre vers le carter inférieur du moteur. Ainsi, le carburant dilué souille l'huile de lubrification dans le carter bas moteur, dégradant par là même les propriétés de lubrification de l'huile, pouvant ainsi engendrer de graves problèmes dans le moteur et réduisant notablement la durée de vie du moteur. D'autre part, ce carburant se diluant dans l'huile n'est pas expulsé avec les gaz d'échappement, dont la teneur en carburant à brûler au niveau du catalyseur d'oxydation est réduite.

**Le document** EP1437492 **propose un procédé d'obtention de gaz d'échappement chargés en carburant d'un moteur Diesel d'un véhicule automobile pourvu d'une boîte de vitesse du type automatique, dans lequel le rapport de réduction de la boîte est modifié pour limiter la dilution du carburant dans l'huile.**

Le but de l'invention est de proposer un procédé permettant d'obtenir des gaz d'échappement comprenant du carburant en réduisant notamment de manière significative la dilution du carburant dans l'huile dans la chambre de combustion.

On atteint ce but de l'invention au moyen d'un procédé d'obtention de gaz d'échappement chargés en carburant par injection(s) tardive(s) et/ou retardée(s) de carburant dans une chambre de combustion d'un moteur Diesel d'un véhicule automobile pourvu d'une boîte de vitesses du type automatique, robotisée ou à variation continue du couple, remarquable en ce que les lois définissant le rapport de réduction de ladite boîte de vitesses sont modifiées pour limiter la dilution du carburant dans l'huile présente dans la chambre de combustion, **à condition que le moteur fonctionne**

**à un régime moteur inférieur à un régime moteur seuil, le rapport de réduction de ladite boîte de vitesses étant alors diminué**.

Comme on le verra plus en détail dans la suite de la description, il est ainsi possible, en jouant sur le rapport de réduction de la boîte de vitesses, d'empêcher le moteur de fonctionner dans une zone de fonctionnement à dilution critique du carburant injecté lors des injections tardive(s) et/ou retardée(s).

De plus, avantageusement, on se propose de rapprocher le point de fonctionnement du moteur de la frontière de la zone de dilution voire de le sortir de la zone de dilution en augmentant le régime moteur.

Selon une première variante de l'invention, les lois définissant le rapport de réduction de la boîte de vitesses ne sont modifiées qu'à condition que le moteur fonctionne dans une zone de fonctionnement à dilution critique du carburant dans l'huile.

Ainsi, avantageusement, le rapport de réduction n'est modifié que si nécessaire, laissant, le reste du temps, inchangées les lois définissant le rapport de réduction de la boîte de vitesses. L'opération est ainsi pratiquement invisible pour le conducteur. Cependant, un capteur supplémentaire est nécessaire pour déterminer le point de fonctionnement du moteur.

Selon une deuxième variante de l'invention, les lois définissant le rapport de réduction de ladite boîte de vitesses sont modifiées dès que le moteur fonctionne en mode d'injection(s) tardive(s) et/ou retardée(s).

Ainsi, il n'est pas nécessaire de rajouter de capteur supplémentaire. Le procédé peut donc être mis en oeuvre sans coût supplémentaire.

De manière préférée, les lois définissant le rapport de réduction de la boîte de vitesses sont modifiées à condition que le moteur fonctionne à une charge moteur inférieure à une charge moteur seuil, le rapport de réduction de la boîte étant alors augmenté.

Ainsi, de manière avantageuse, on se propose de rapprocher le point de fonctionnement du moteur de la frontière de la zone de dilution voire de le sortir de la zone de dilution en augmentant la charge moteur.

De préférence, dans le cas d'une boîte de vitesses automatique ou robotisée, on commande la boîte de vitesses selon au moins une loi modifiée de passage de rapports de vitesses différente de la loi nominale de passage de rapports de vitesses.

Ainsi, avantageusement, il est possible de commander les changements de rapports de la boîte de vitesses de manière à empêcher le moteur de fonctionner dans une zone de fonctionnement à dilution critique. Cette solution est facile à mettre en oeuvre.

De manière préférée, dans des conditions de fonctionnement du moteur où la loi nominale de passage de rapports de vitesses associe un premier rapport de vitesses, la loi modifiée associe un second rapport de vitesses supérieur.

De manière avantageuse, il est ainsi possible d'obliger le moteur à fonctionner avec une charge moteur plus élevée, ce qui, comme on le verra par la suite, éloigne le point de fonctionnement du moteur de la zone de dilution critique du carburant dans l'huile.

De préférence, les lois nominale et modifiée étant fonction de l'angle de la pédale d'accélérateur et de la vitesse du véhicule, la loi modifiée présente un palier à un premier angle de pédale d'accélérateur dans une plage de vitesses du véhicule où la loi nominale présente un palier à un second angle de pédale d'accélérateur inférieur au premier angle de pédale d'accélérateur.

Ainsi, avantageusement, on modifie de manière simple la loi de passage de rapports de vitesses de manière à forcer le moteur à fonctionner avec une charge élevée.

L'invention concerne également un procédé de régénération d'un filtre à particules monté dans une ligne d'échappement d'un véhicule automobile comprenant un catalyseur d'oxydation monté en amont ou intégré audit filtre à particules, ledit véhicule automobile étant du type à moteur Diesel et à boîte de vitesses automatique, robotisée ou à variation continue du couple, remarquable en ce qu'on chauffe des suies accumulées dans ledit filtre à particules grâce à la chaleur résultant de la combustion, qui a lieu au moins en partie au niveau dudit catalyseur d'oxydation, de carburant apporté par lesdits gaz d'échappement obtenus selon un procédé tel que décrit ci-avant dans toutes ses variantes.

L'invention se rapporte aussi à un véhicule automobile du type à moteur Diesel et à boîte de vitesses automatique, robotisée ou à variation continue du couple, remarquable en ce qu'il comporte une unité électronique de commande de la boîte de vitesses apte à mettre en oeuvre le procédé d'obtention de gaz d'échappement chargés en carburant tel que décrit ci-avant dans toutes ses variantes.

Enfin, l'invention concerne également un véhicule automobile tel que décrit ci-avant, comprenant en outre une ligne d'échappement dans laquelle est monté un filtre à particules couplé à un catalyseur d'oxydation monté en amont du filtre à particules ou dans le filtre à particules, remarquable en ce que les suies accumulées dans ledit filtre à particules sont chauffées grâce à la chaleur résultant de la combustion, qui a lieu au moins en partie au niveau dudit catalyseur d'oxydation, de carburant apporté par lesdits gaz d'échappement.

D'autres avantages et caractéristiques de l'invention apparaîtront de la description qui va suivre, présentée uniquement à titre d'exemple illustratif et non limitatif, en regard des figures ci-annexées, sur lesquelles :

- la figure 1 représente schématiquement un exemple de cartographie de la zone de dilution de l'huile par le carburant dans un moteur Diesel en fonction de la charge du moteur et du régime du moteur,
- la figure 2 représente un ensemble de lois de passage de rapports de vitesses d'une boîte de vitesses automatique en fonction de l'angle de la pédale d'accélérateur et de la vitesse du véhicule, en phase « normale » et en phase « régénération du filtre à particules », et
- la figure 3 représente schématiquement le fonctionnement d'un dispositif permettant la mise en oeuvre du procédé selon l'invention.

Pour rappel, la charge Ch d'un moteur à un régime n donné est définie de manière équivalente par les équations suivantes :

$$Ch(n) = \frac{Pe(n)}{Pe_{max}(n)} \qquad (E1)$$

$$Ch(n) = \frac{C(n)}{C_{max}(n)} \qquad (E2)$$

où :

- Pe(n) représente la puissance moteur au régime n donné ;
- $Pe_{max}(n)$ la puissance moteur maximale au même régime n donné ;
- C(n) le couple moteur au régime n donné ;
- $C_{max}(n)$ le couple moteur maximal au même régime n donné.

Par ailleurs, dans la suite de la description, il sera fait une distinction entre le rapport de réduction d'une boîte de vitesses et le rapport de vitesses d'une boîte de vitesses.
Le rapport de réduction $\eta_{réduction}$ est défini, de manière connue, par :

$$\eta_{réduction} = \frac{n_{arbre\ secondaire}}{n_{arbre\ primaire}}$$

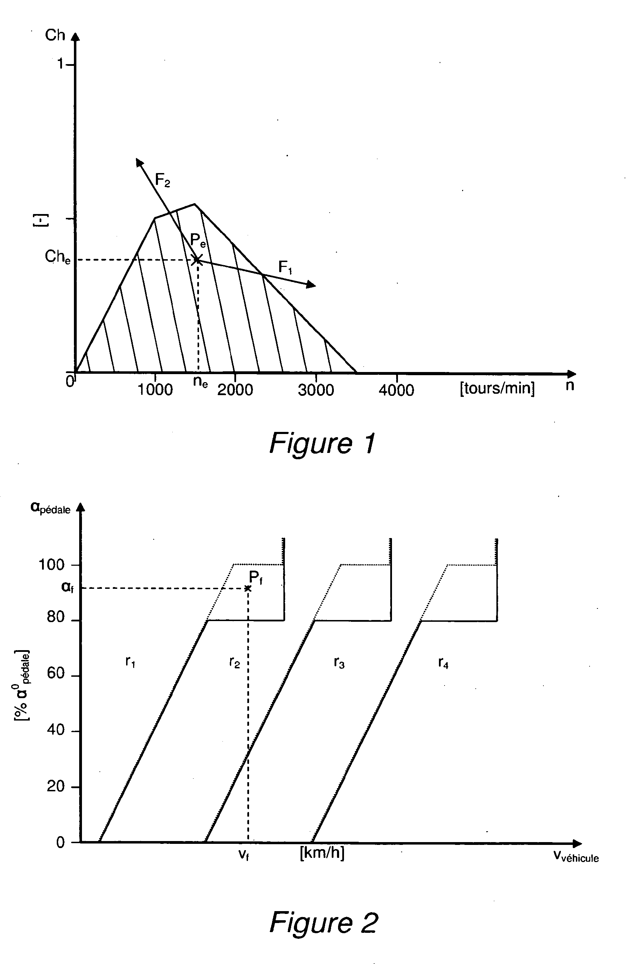

où $n_{arbre\ primaire}$ et $n_{arbre\ secondaire}$ définissent la vitesse angulaire respectivement, de l'arbre primaire et de l'arbre secondaire de la boîte de vitesses considérée.
Le rapport de vitesses désigne la vitesse enclenchée et ne concerne donc que les boîtes automatiques et robotisées. A chaque rapport de vitesses d'une boîte de vitesses automatique ou robotisée correspond un rapport de réduction de boîte de vitesses.
Par ailleurs, on distinguera également dans la suite de la description, les lois de passage des rapports de vitesses dites nominales, c'est-à-dire, les lois de passages mises en oeuvre en phase d'injections « normales » sans injection tardive ni injection retardée, des lois de passages des rapports de vitesse modifiées mises en oeuvre durant tout ou partie de phases d'injections modifiées, c'est-à-dire comprenant au moins une injection retardée et/ou au moins une injection tardive.
A l'heure actuelle, seules des expertises en laboratoire permettent de mesurer le taux de carburant dilué dans l'huile lubrifiant un moteur. Ces expertises permettent de construire une cartographie du taux de dilution de l'huile par le carburant du moteur en fonction de la charge moteur et du régime moteur. Un exemple d'une telle cartographie est représenté sur la figure 1.
Sur la figure 1, la zone hachurée correspond à la zone de fonctionnement d'un moteur Diesel, où une partie du carburant injecté dans la chambre de combustion selon un procédé d'injection retardée et/ou tardive se dilue dans l'huile lubrifiant le moteur qui recouvre la chemise du cylindre. Il se dégage de cette figure 1 et d'autres cartographies réalisées et non représentées ici, une tendance à la forte dilution de l'huile dans les points de fonctionnement moteur à faible charge, notamment à régime modéré, la dilution de l'huile par le carburant diminuant lorsque la charge augmente tandis que le régime moteur est constant.
Bien évidemment, à l'approche de la frontière de cette zone de dilution, la dilution du carburant par l'huile est moins importante.

Selon l'invention, on propose d'empêcher que le moteur ne fonctionne dans une zone critique de dilution en modifiant le rapport de vitesses de la boîte de vitesses.

Selon l'invention, la modification de ce rapport de réduction de boîte de vitesses est telle qu'on diminue le rapport de réduction de boîte de vitesses selon le régime moteur. Ainsi, en gardant sensiblement la même vitesse du véhicule, on augmente le régime du moteur. Sur la figure 1, par exemple, si l'on considère comme point de départ le point Pe correspondant à une charge $Ch_e$ et un régime moteur $n_e$, cette modification du rapport de réduction de la boîte de vitesses déplace le point de fonctionnement Pe dans le sens de la flèche $F_1$ vers une zone de fonctionnement du moteur où la dilution du carburant dans l'huile est moins importante.

Par exemple, pour une boîte de vitesses automatique ou robotisée en mode automatique, on peut modifier les lois de passages de rapports de vitesses. Cette modification peut consister en ce que, à une vitesse donnée correspondant à un premier rapport de vitesses d'après les lois nominales de passage de rapports, la loi de passage de rapports de vitesses modifiée associe un rapport de vitesses inférieur, de préférence le rapport de vitesses directement inférieur, qui correspond à un rapport de réduction inférieur. En effet, on augmente ainsi le régime moteur et on décale donc le point de fonctionnement du moteur vers une zone de fonctionnement du moteur, à régime plus élevé et à charge plus faible, où la dilution du carburant dans l'huile est moins importante.

Cette modification est plus particulièrement appropriée pour les vitesses de véhicules correspondants à une plage de régimes compris entre 1500 et 3500 tours/min puisque la courbe frontière de la zone de dilution est décroissante dans cette plage.

Selon une caractéristique additionnelle de l'invention, on se propose d'augmenter le rapport de réduction de la boîte de vitesses selon la charge moteur.

En effet, si on considère un véhicule automobile à une vitesse $V_a$, à un rapport de vitesses $r_a$ et au régime moteur $n_a$ correspondant au rapport de vitesses $r_a$ et à la vitesse $v_a$, le moteur délivre un couple $C(n_a)$.

Si on considère maintenant le même véhicule à la même vitesse $V_a$ mais au rapport de vitesses $r_b$ directement supérieur à $r_a$, le régime moteur varie et est égal à $n_b$, $n_b$ étant inférieur à $n_a$. Dans ces conditions, le moteur délivre alors un couple $C(n_b)$.

Il est connu qu'alors la charge $Ch(n_b)$ est supérieure à la charge $Ch(n_a)$.

On augmente donc la charge du moteur en augmentant le rapport de réduction de la boîte de vitesses, c'est-à-dire, dans le cas d'une boîte de vitesses automatique ou robotisée, en enclenchant un rapport de vitesses supérieur tout en conservant constante la vitesse du véhicule. Sur la figure 1, si on considère le point Pe comme point de départ, une telle modification du rapport de réduction de la boîte de vitesses déplace le point de fonctionnement du moteur, dans le sens de la flèche $F_2$, vers une zone de fonctionnement du moteur à charge plus élevée et à régime moindre, où la dilution du carburant dans l'huile est moins critique.

En particulier, dans une boîte de vitesses automatique ou robotisée en mode automatique, on peut modifier les lois de passage des rapports de vitesses afin d'éviter que le moteur ne fonctionne avec une charge trop faible et, notamment, modifier les lois de passage des rapports de vitesses de manière à ce que, si le moteur fonctionne avec une charge trop faible, un passage de rapports de vitesses soit effectué et qu'un rapport supérieur, de préférence le rapport directement supérieur, à celui mis initialement en oeuvre soit enclenché.

La figure 2 représente schématiquement une modification des lois de passage des rapports de vitesses aboutissant à cet objectif de limiter le fonctionnement du moteur avec une faible charge, dans une boîte de vitesses automatique à quatre rapports de vitesses $r_1$, $r_2$, $r_3$ et $r_4$. Par « loi de passage des rapports de vitesses » on entend ici plus précisément une loi déterminant le passage d'un rapport de vitesses à un rapport adjacent en fonction de l'angle de la pédale d'accélérateur $\alpha_{Pédale}$ et de la vitesse du véhicule Véhicule.

Sur cette figure 2, l'angle de la pédale d'accélérateur $\alpha_{pédale}$ est représenté en pourcentage de l'angle $\alpha^0_{pédale}$ de la pédale d'accélérateur correspondant au point dur de la pédale, tandis que la vitesse du véhicule est représentée en km/h.

Sur cette figure 2, les traits pleins représentent les différentes lois de passage nominales, tandis que les traits en pointillés représentent les lois de passages des rapports de vitesses modifiées, selon l'invention.

Comme le montre la figure 2, les lois de passage nominales sont, dans cet exemple, des lois présentant une première partie affine pour un angle de la pédale compris entre 0 et 80% puis présentant un palier horizontal à cette valeur de l'angle de la pédale d'accélérateur égal à 80% de l'angle $\alpha^0_{pédale}$. Les lois de passage se terminent par une partie verticale sur la figure 2 qui correspond à un angle de la pédale d'accélérateur supérieur à 80% de l'angle $\alpha^0_{pédale}$. Un tel enfoncement peut être autorisé afin, par exemple, de permettre au conducteur de commander une rétrogradation qui augmente le régime moteur, ou commander la désactivation du régulateur de vitesse ou du limiteur de vitesse.

Les lois modifiées lors des phases d'injection(s) tardive(s) et/ou retardée(s), telles que représentées sur la figure 2, présentent une première partie sensiblement identique à la partie affine des lois nominales, à ceci près que les lois modifiées présentent un palier à un angle de pédale d'accélérateur égal à 100% de l'angle $\alpha^0_{pédale}$ et non plus à un angle de pédale égal à 80%.

Ainsi, le point de fonctionnement indiqué $P_f$ sur la figure 2, qui correspond à une vitesse du véhicule $v_f$ et un angle de pédale d'accélérateur $\alpha_f$, correspond, selon les lois nominales de passage de rapports de vitesses au rapport $r_1$, tandis qu'il correspond au rapport $r_2$, supérieur à $r_1$, selon les lois modifiées de passage de rapports de vitesses. Ainsi, avec les lois modifiées de passage des rapports de vitesses, la boîte de vitesses a tendance à forcer le passage du rapport de vitesses supérieur à celui qui serait enclenché d'après les lois nominales de passage de rapports.

Bien entendu, d'autres modifications sont possibles. On peut notamment imaginer que les lois de passage de rapports de vitesses soient modifiées de telle sorte que les parties affines des lois soient translatées vers la gauche de la figure 2 et/ou que la pente de ces parties affines soit plus grande de manière à ce que pour un même angle de la pédale d'accélérateur, la vitesse du véhicule déclenchant le passage du rapport de vitesses supérieur dans les lois de passages modifiées soit inférieure à la vitesse du véhicule déclenchant le même passage de rapports dans les lois de passage nominales. Les lois de passage de rapports peuvent également être fonction d'autres paramètres comme par exemple la charge du moteur, le régime moteur ou même la pente de la route sur laquelle évolue le véhicule automobile. Ces lois peuvent également être modifiées de telle sorte qu'on empêche le moteur de fonctionner avec une charge moteur trop faible.

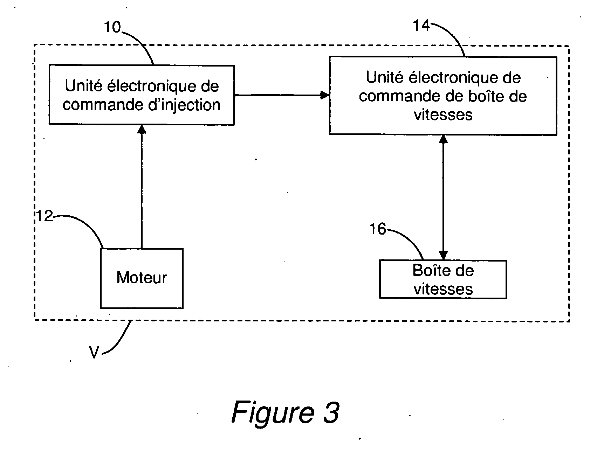

La figure 3 représente schématiquement le fonctionnement d'un dispositif permettant la mise en oeuvre du procédé d'obtention de gaz chargés en carburant selon l'invention dans un véhicule V.

Le dispositif de la figure 3 comporte une unité électronique de commande d'injection 10 commandant l'injection du carburant dans le moteur 12, et une unité électronique de commande de transmission 14 commandant une boîte de vitesses 16 du type à boîte de vitesses automatique, robotisée en fonctionnement automatique ou CVT.

Afin de mettre en oeuvre le procédé d'obtention de gaz d'échappement chargés en carburant selon l'invention, on modifie, de manière connue, les lois d'injection contenues dans l'unité électronique de commande d'injection 10 afin de modifier le procédé d'injection et de réaliser une ou plusieurs injections retardées et/ou une ou plusieurs injections tardives. Afin de diminuer la dilution du carburant dans l'huile due aux réglages spécifiques de l'injection, une requête est envoyée par l'unité électronique de commande d'injection 10 à l'unité électronique de commande de transmission 14 afin que celle-ci prenne en compte l'état modifié des lois d'injections.

L'unité électronique de commande de transmission 14 modifie alors les lois de passages des rapports de vitesse afin d'éviter que le moteur ne fonctionne dans une zone de fonctionnement régime/charge où la dilution du carburant par l'huile est critique, c'est-à-dire lorsqu'elle est de l'ordre de 6 à 8%. L'unité électronique de commande de transmission 14 peut par exemple modifier les lois de passages de rapports de vitesses comme cela a été décrit ci-avant en regard de la figure 2. En adoptant des lois de passages des rapports de vitesses modifiées, l'unité électronique de commande de transmission 14 force le moteur à rester sur des points de fonctionnement (régime, charge) de plus grande charge, notamment en passant, le cas échéant, le rapport de vitesses supérieur à celui enclenché selon les lois nominales de passage des rapports de vitesses. Ainsi, le moteur est empêché de fonctionner avec une charge trop faible ce qui permet de limiter voire d'éviter la dilution du carburant dans l'huile durant les phases d'injection(s) retardée (s) et/ou tardive(s).

Un tel dispositif trouve une application, par exemple, dans les véhicules automobiles à moteur Diesel et à boîte de vitesses automatique, robotisée en mode automatique ou CVT et munis d'un filtre à particules et d'un catalyseur d'oxydation, lors des phases de régénération du filtre à particules. En effet, comme cela a été décrit ci-avant, il est connu de mettre en oeuvre un procédé d'injection(s) tardive(s) et/ou retardée(s) afin d'augmenter la température des gaz d'échappement au niveau du filtre à particules de manière à brûler les particules accumulées dans le filtre à particules.

Notamment, dans un véhicule automobile muni d'une boîte de vitesses automatique ou robotisée en mode automatique, dans de telles phases de régénération du filtre à particules, l'unité électronique de commande d'injection 10 modifie le procédé d'injection afin de réaliser une ou plusieurs injections tardives et/ou une ou plusieurs injections retardées. Par ailleurs, l'unité électronique de commande d'injection 10 envoie une requête à l'unité électronique de commande de transmission pour que celle-ci prenne en compte la phase de régénération du filtre à particules en adoptant des lois de passage de rapports de vitesses modifiées comme celles décrites ci-avant en regard de la figure 2, par exemple.

Les phases de régénération sont amorcées, par exemple, en fonction de critères de vitesse du véhicule, de température d'échappement et/ou de traces de suies dans le filtre à particules.

L'invention ne se réduit pas au seul mode de réalisation décrit ici à titre d'exemple illustratif et non limitatif et de nombreux modes de réalisation sont possibles sans sortir du cadre de l'invention.

Par ailleurs, le procédé selon l'invention décrit ci-avant modifie les lois définissant le rapport de réduction de la boîte de vitesses, en particulier les lois de passages de rapports dès que le procédé d'injection est modifié, indépendamment des conditions de fonctionnement du moteur. Cela signifie que dès que l'injection du carburant est modifiée, les lois de passages de rapports modifiées sont adoptées. Cependant, on peut très bien imaginer que ces lois ne sont adoptées que ponctuellement, lorsque le moteur est à un point de fonctionnement régime/charge critique ou proche d'une zone critique vis-à-vis de la dilution du carburant dans l'huile. On peut déterminer une telle situation en mesurant la charge du moteur, par exemple, à l'aide d'un capteur de couple monté sur l'arbre primaire et en comparant la valeur mesurée au couple maximal que le moteur peut fournir au régime moteur considéré (voir définition de la charge).

D'autre part, le procédé selon l'invention peut être mis en oeuvre pour d'autres applications. Il est avantageusement mis en oeuvre pour obtenir des gaz d'échappement chargés en carburant qui peut brûler dans la ligne d'échappement, en amont de la chambre de combustion et notamment au niveau du catalyseur d'oxydation. On obtient ainsi une source de chaleur importante.

Enfin, il est à noter que la modification des lois définissant le changement de rapport de réduction de la boîte de vitesses selon l'invention est indépendante des injections tardives ou retardées de carburant, celles-ci pouvant être réalisées de différentes manières sans sortir du cadre de l'invention (angle du vilebrequin au moment des injections, durée des injections, nombres d'injections).

## Revendications

**1.** Procédé d'obtention de gaz d'échappement chargés en carburant par injection(s) tardive(s) et/ou retardée(s) de carburant dans une chambre de combustion d'un moteur Diesel (12) d'un véhicule automobile (V) pourvu d'une boîte de vitesses (16) du type automatique, robotisée ou à variation continue du couple, **caractérisé en ce que** les lois définissant le rapport de réduction de ladite boîte de vitesses (16) sont modifiées pour limiter la dilution du carburant dans l'huile présente dans la chambre de combustion, **à condition que le moteur (12) fonctionne à un régime moteur inférieur à un régime moteur seuil, le rapport de réduction de ladite boîte de vitesses (16) étant alors diminué.**

**2.** Procédé selon la revendication 1, **caractérisé en ce que** lesdites lois définissant le rapport de réduction de ladite boîte de vitesses (16) ne sont modifiées qu'à condition que le moteur (12) fonctionne dans une zone de fonctionnement à dilution critique du carburant dans l'huile.

**3.** Procédé selon la revendication 1, **caractérisé en ce que** lesdites lois définissant le rapport de réduction de ladite boîte de vitesses (16) sont modifiées dès que le moteur (12) fonctionne en mode d'injection(s) tardive(s) et/ou retardée(s).

**4.** Procédé selon l'une des revendications 1 à 3, **caractérisé en ce que** lesdites lois définissant le rapport de réduction de ladite boîte de vitesses (16) sont modifiées à condition que le moteur (12) fonctionne à une charge moteur inférieure à une charge moteur seuil, le rapport de réduction de ladite boîte étant alors augmenté.

**5.** Procédé selon l'une des revendications 1 à 4, dans le cas d'une boîte de vitesses automatique ou robotisée (16), **caractérisé en ce qu'**on commande ladite boîte de vitesses (16) selon au moins une loi modifiée de passage de rapports de vitesses différente de la loi nominale de passage de rapports de vitesses.

**6.** Procédé selon la revendication 5 prise en combinaison avec la revendication 4, **caractérisé en ce que** dans des conditions de fonctionnement du moteur (12) où ladite loi nominale de passage de rapports de vitesses associe un premier rapport de vitesses, ladite loi modifiée associe un second rapport de vitesses supérieur.

**7.** Procédé selon la revendication 6, **caractérisé en ce que**, lesdites lois nominale et modifiée étant fonction de l'angle de la pédale d'accélérateur et de la vitesse du véhicule (V), ladite loi modifiée présente un palier à un premier angle de pédale d'accélérateur dans une plage de vitesses du véhicule où ladite loi nominale présente un palier à un second angle de pédale d'accélérateur inférieur audit premier angle de pédale d'accélérateur.

**8.** Procédé de régénération d'un filtre à particules monté dans une ligne d'échappement d'un véhicule automobile (V) comprenant un catalyseur d'oxydation monté en amont ou intégré audit filtre à particules, ledit véhicule automobile (V) étant du type à moteur Diesel et à boîte de vitesses automatique, robotisée ou à variation continue du couple, **caractérisé en ce qu'**on chauffe des suies accumulées dans ledit filtre à particules grâce à la chaleur résultant de la combustion, qui a lieu au moins en partie au niveau dudit catalyseur d'oxydation, de carburant apporté par lesdits gaz d'échappement obtenus selon un procédé conforme à l'une des revendications 1 à 7.

**9.** Véhicule automobile (V) du type à moteur Diesel et à boîte de vitesses automatique, robotisée ou à variation continue du couple, **caractérisé en ce qu'**il comporte une unité électronique de commande de la boîte de vitesses (14) apte à mettre en oeuvre le procédé d'obtention de gaz d'échappement chargés en carburant selon l'une quelconque des revendications 1 à 7.

**10.** Véhicule automobile (V) selon la revendication 9, comprenant en outre une ligne d'échappement dans laquelle est monté un filtre à particules couplé à un catalyseur d'oxydation monté en amont du filtre à particules ou dans le filtre à particules **caractérisé en ce que** les suies accumulées dans ledit filtre à particules sont chauffées grâce à la chaleur résultant de la combustion, qui a lieu au moins en partie au niveau dudit catalyseur d'oxydation, de carburant apporté par lesdits gaz d'échappement.

**Claims**

**1.** Method for obtaining exhaust gases loaded with fuel by late and/or delayed fuel injection(s) into a combustion chamber of a diesel engine (12) of a motor vehicle (V) provided with an automatic, robotized or constantly variable torque (CVT) gearbox (16), **characterized in that** the laws defining the reduction ratio of said gearbox (16) are modified to limit the dilution of the fuel in the oil present in the combustion chamber, if the engine (12) operates at an engine speed lower than an engine speed threshold, the reduction ratio of said gearbox (16) then being decreased.

**2.** Method according to Claim 1, **characterized in that** said laws defining the reduction ratio of said gearbox (16) are only modified if the engine (12) operates in an operating zone with critical dilution of the fuel in the oil.

**3.** Method according to Claim 1, **characterized in that** said laws defining the reduction ratio of said gearbox (16) are modified as soon as the engine (12) operates in late and/or delayed injection mode.

**4.** Method according to one of Claims 1 to 3, **characterized in that** said laws defining the reduction ratio of said gearbox (16) are only modified if the engine (12) operates at an engine load lower than an engine load threshold, the reduction ratio of said gearbox then being increased.

**5.** Method according to one of Claims 1 to 4, in the case of an automatic or robotized gearbox (16), **characterized in that** said gearbox (16) is controlled according to at least one modified gear shift transition law different from the nominal gear shift transition law.

**6.** Method according to Claim 5 taken in combination with Claim 4, **characterized in that** in operating conditions of the engine (12) in which said nominal gear shift transition law associates a first gear, said modified law associates a second higher gear.

**7.** Method according to Claim 6, **characterized in that**, said nominal and modified laws being a function of the accelerator pedal angle and of the speed of the vehicle (V), said modified law has a plateau at a first accelerator pedal angle in a vehicle speed range in which said nominal law has a plateau at a second accelerator pedal angle lower than said first accelerator pedal angle.

**8.** Method for regenerating a particulate filter mounted in an exhaust line of a motor vehicle (V) comprising an oxidation catalyst mounted upstream of or built into said particulate filter, said motor vehicle (V) being of the diesel engine type and having an automatic, robotized or continuously variable torque gearbox, **characterized in that** soot accumulated in said particulate filter is burned using the heat generated by the combustion, which takes place at least partly in said oxidation catalyst, of fuel conveyed by said exhaust gases obtained by a method according to one of Claims 1 to 7.

**9.** Motor vehicle (V) of the diesel engine type with an automatic, robotized or continuously variable torque gearbox, **characterized in that** it comprises an electronic unit for gearbox control (14) suitable for implementing the method for obtaining exhaust gases loaded with fuel according to any one of Claims 1 to 7.

**10.** Motor vehicle (V) according to Claim 9, further comprising an exhaust line in which a particulate filter is mounted coupled with an oxidation catalyst mounted upstream of the particulate filter or in the particulate filter, **characterized in that** soot accumulated in said particulate filter is burned using the heat generated by the combustion, which takes place at least partly in said oxidation catalyst, of fuel conveyed by said exhaust gases.

**Patentansprüche**

1. Verfahren zum Erhalt von mit Kraftstoff beladenen Abgasen durch späte und/oder verzögerte Kraftstoffeinspritzung(en) in eine Brennkammer eines Dieselmotors (12) eines Kraftfahrzeugs (V), das mit einem Automatik- (16), automatisiertem Getriebe oder mit einem Getriebe mit stufenlos verstellbarem Drehmoment versehen ist, **dadurch gekennzeichnet, dass** die das Untersetzungsverhältnis des Getriebes (16) definierenden Gesetze modifiziert werden, um die Verdünnung des Kraftstoffs in dem in der Brennkammer vorhandenen Öl zu begrenzen, vorausgesetzt, dass der Motor (12) mit einer geringeren Motordrehzahl läuft als ein Motordrehzahlschwellwert, wobei das Untersetzungsverhältnis des Getriebes (16) dann verringert wird.

2. Verfahren nach Anspruch 1, **dadurch gekennzeichnet, dass** die das Untersetzungsverhältnis des Getriebes (16) definierenden Gesetze nur unter der Voraussetzung modifiziert werden, dass der Motor (12) in einem Betriebsbereich mit kritischer Verdünnung des Kraftstoffs in dem Öl läuft.

3. Verfahren nach Anspruch 1, **dadurch gekennzeichnet, dass** die das Untersetzungsverhältnis des Getriebes (16) definierenden Gesetze modifiziert werden, sobald der Motor (12) in einem Modus später und/oder verzögerter Einspritzung(en) läuft.

4. Verfahren nach einem der Ansprüche 1 bis 3, **dadurch gekennzeichnet, dass** die das Untersetzungsverhältnis des Getriebes (16) definierenden Gesetze unter der Voraussetzung modifiziert werden, dass der Motor (12) mit einer Motorbelastung läuft, die geringer ist ein Motorbelastungsschwellwert, wobei das Untersetzungsverhältnis des Getriebes dann größer wird.

5. Verfahren nach einem der Ansprüche 1 bis 4, bei einem Automatik- oder automatisierten Getriebe (16), **dadurch gekennzeichnet, dass** das Getriebe (16) gemäß mindestens einem modifizierten Gangschaltgesetz gesteuert wird, das sich von dem Nenngangschaltgesetz unterscheidet.

6. Verfahren nach Anspruch 5 in Kombination mit Anspruch 4, **dadurch gekennzeichnet, dass** bei Betriebsbedingungen des Motors (12), unter denen das Nenngangschaltgesetz ein erstes Übersetzungsverhältnis zuordnet, das modifizierte Gesetz ein zweites größeres Übersetzungsverhältnis zuordnet.

7. Verfahren nach Anspruch 6, **dadurch gekennzeichnet, dass** das Nenn- und das modifizierte Gesetz von dem Fahrpedalwinkel und der Geschwindigkeit des Fahrzeugs (V) abhängig sind, wobei das modifizierte Gesetz bei einem ersten Fahrpedalwinkel ein Plateau in einem Geschwindigkeitsbereich des Fahrzeugs aufweist, in dem das Nenngesetz bei einem zweiten Fahrpedalwinkel, der kleiner ist als der erste Fahrpedalwinkel, ein zweites Plateau aufweist.

8. Verfahren zur Regeneration eines Partikelfilters, der in einer Abgasleitung eines Kraftfahrzeugs (V) mit einem Oxidationskatalysator, der stromaufwärts des Partikelfilters angebracht oder damit integriert ist, angebracht ist, wobei das Kraftfahrzeug (V) ein Dieselmotorfahrzeug ist und ein Automatik-, automatisiertes Getriebe oder Getriebe mit stufenlos verstellbarem Drehmoment aufweist, **dadurch gekennzeichnet, dass** in dem Partikelfilter angesammelter Ruß unter Verwendung der Wärme erhitzt wird, die aus der teilweise am Oxidationskatalysator stattfindenden Verbrennung des durch die gemäß einem der Ansprüche 1 bis 7 erhaltenen Abgase mitgeführten Kraftstoffs resultiert.

9. Kraftfahrzeug (V) mit Dieselmotor und Automatik-, automatisiertem Getriebe oder Getriebe mit stufenlos verstellbarem Drehmoment, **dadurch gekennzeichnet, dass** es eine elektronische Steuereinheit (14) für das Getriebe aufweist, die das Verfahren zum Erhalt von mit Kraftstoff beladenen Abgasen nach einem der Ansprüche 1 bis 7 durchführen kann.

10. Kraftfahrzeug (V) nach Anspruch 9, weiterhin mit einer Abgasleitung, in der ein Partikelfilter angebracht ist, der mit einem Oxidationskatalysator gekoppelt ist, welcher stromaufwärts des Partikelfilters oder in dem Partikelfilter angebracht ist, **dadurch gekennzeichnet, dass** in dem Partikelfilter angesammelter Ruß unter Verwendung der Wärme erhitzt wird, die aus der teilweise am Oxidationskatalysator stattfindenden Verbrennung des durch die Abgase mitgeführten Kraftstoffs resultiert.

*Figure 1*

*Figure 2*

10

14

Unité électronique de
commande d'injection

Unité électronique de
commande de boîte de
vitesses

12

Moteur

16

Boîte de
vitesses

V

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1437492 A